# EUROPEAN PATENT SPECIFICATION

(11) **EP 1 183 448 B1**
(45) Date of publication and mention of the grant of the patent: **22.12.2004**
(21) Application number: 99950276.8
(22) Date of filing: 08.10.1999
(51) Int. Cl.: F01N 3/28

(54) **HIGH TEMPERATURE MAT FOR A POLLUTION CONTROL DEVICE**
HOCHTEMPERATURFESTE LAGERMATTE FÜR EINE ABGASREINIGUNGSVORRICHTUNG
MATTE A TEMPERATURE ELEVEE POUR DISPOSITIF DE CONTROLE DE POLLUTION

(30) Priority: 08.06.1999 US 328065
(43) Date of publication of application: 06.03.2002
(73) Proprietor: 3M Innovative Properties Company, St. Paul, MN 55133-3427 (US)
(72) Inventor: LANGER, Roger, L., Saint Paul, MN 55133-3427 (US)
(74) Representative: Meyers, Hans-Wilhelm, Dr.Dipl.-Chem.
(86) International application number: PCT/US1999/023537
(87) International publication number: WO 2000/075496

(56) References cited:
- EP-A- 0 366 484
- EP-A- 0 573 834
- EP-A- 0 856 646
- WO-A-98/35144
- GB-A- 1 481 133
- US-A- 4 929 429
- US-A- 5 332 609

## Description

The present invention relates to mounting materials for pollution control devices, and more particularly to a sheet of mounting material suitable for as a high temperature insulating layer in a pollution control device, and even more particularly to a sheet of mounting material containing a mixture of polycrystalline fibers and annealed ceramic fibers.

### Background

Pollution control devices are employed on motor vehicles to control atmospheric pollution. Catalytic converters and diesel particulate filters are two types of pollution control devices which are currently in widespread use. Both of these devices typically contain a pollution control element, or monolithic structure, mounted within a metal housing with a mounting material disposed between the structure and the walls of the housing. The monolithic structure, or monolith, is either made from metal or more commonly, a ceramic material. In a catalytic converter, the monolith supports a catalyst which promotes the oxidization of carbon monoxide and hydrocarbons, and the reduction of oxides of nitrogen at high temperatures, e.g., over 260°C. Diesel particulate filters or traps are wall flow filters which have honeycombed monolithic structures typically made from porous crystalline ceramic materials.

Ceramic monoliths generally have very thin walls and are susceptible to breakage. Typically, a ceramic monolith has a coefficient of thermal expansion about an order of magnitude less than the metal housing in which it is contained. To avoid damage to the ceramic monolith from road shock and vibration, to compensate for the differences in thermal expansion of the monolith and housing, and to prevent exhaust gases from flowing between the monolith and metal housing, mounting materials are typically disposed between the ceramic monolith and the metal housing.

The process of placing or disposing of the mounting material or mat is also called canning and includes such processes as injecting a paste into a gap between the monolith and the metal housing, or wrapping a sheet or mat material around the monolith and inserting the wrapped monolith into the housing. Mats are generally made with various types of ceramic fibrous materials. The ceramic fibers are made by conventional processes, such as melt-forming processes. EP 0 573 834 discloses a catalytic converter of the state of the art. It contains a metallic monolith that is mounted in a canister by a heat-insulating mat of melt-formed ceramic fibers.

A sol-gel process is another method utilized for providing fibers for use in mounting mats. The sol-gel process produces fibers that are generally characterized with high temperature resiliency and a desirable level of erosion resistance. However, fibers produced from the sol-gel process typically have a low density that requires additional processing in order to provide a mat suitable for direct application in a pollution control device. Additionally, the economic costs of operating a sol-gel process can be quite high in comparison to other conventional fiber producing processes.

### Summary

The present invention is directed to a high temperature mat for a pollution control device. The mounting mat is suitable for wrapping a pollution control element and securing the wrapped element within the pollution control device. Additionally, the high temperature mat can be utilized as an insulating layer in a double wall end cone of a pollution control device. The present invention is generally utilized in pollution control devices such as catalytic converters and diesel particulate filters.

The high temperature mat of the present invention includes a mixture of polycrystalline fibers and annealed ceramic fibers. The polycrystalline fibers are generally sol-gel formed fibers that contain very small amounts of (or less than 5% by weight of) any ceramic particulate matter. The other ceramic fiber component of the present invention is an annealed ceramic fiber that has at least partial crystallinity. The combination of the noted fibers results in a mounting mat having a density that is suitable for direct use in pollution control devices without requiring additional processing steps. The present mounting mat also has good erosion resistance and a desirable resiliency value at high temperatures and normal mounting pressures.

The high temperature mat is utilized in pollution control devices. A pollution control device of the present invention includes a housing and a pollution control element positioned within the housing. A mounting mat, produced in accordance with the present invention, is positioned around the outer surface of the element between the element and the housing. Alternatively, the high temperature mounting mat can be utilized as an insulating layer in a double wall end cone of a pollution control device -- i.e., the insulating layer is sandwiched between inner and outer metal cone of a double wall end cone.

It is an advantage to provide a mounting mat that has a desirable density and bulk thickness that does not require additional processing to achieve a desired bulk density prior to canning. It is also an advantage to provide a pollution control device utilizing the high temperature mat to obtain a desirable resiliency and good erosion resistance at elevated operating temperatures and normal mounting pressures.

For purposes of the present invention, the following terms used in this application are defined as follows:
"shot-free ceramic fibers" polycrystalline fibers having less than about 5% particulate ceramic material and are typically formed by the sol-gel process;
"annealed amorphous fibers" means melt formed refractory ceramic fibers that have been that have been annealed to a temperature sufficient to improve the resiliency of the fibers. Preferably, the annealing process is stopped before the fibers become excessively friable as determined by the cold erosion test. The annealed fibers exhibit a degree of crystallinity as determined by X-ray diffraction and by transmission electron microscopy for microcrystallinity. Suitability of fibers can be determined by differential thermal analysis;
"resiliency" means the ability to maintain substantial holding force despite repeated thickness change. i.e., compression and relaxation cycles; and
"ceramic-based fibers" means fibers containing an amount of metal oxides, metal carbides, metal nitrides, or combinations thereof at levels of 80% or greater.

### Brief Description of the Drawings

The invention will be more fully appreciated with reference to the following drawings in which similar reference numerals designate like or analogous components throughout and in which:
FIG. 1 is an exploded perspective view of a wrapped pollution control element positioned within a housing.
FIG. 2 is a segmented view of a two layered sheet of mounting material according to the present invention;
FIG. 3 is an X-ray diffraction diagram of a melt-formed ceramic fiber containing a crystalline structure; and
FIG. 4 is an X-ray diffraction diagram of a melt-formed ceramic fiber exhibiting a non-crystalline structure.

### Detailed Description

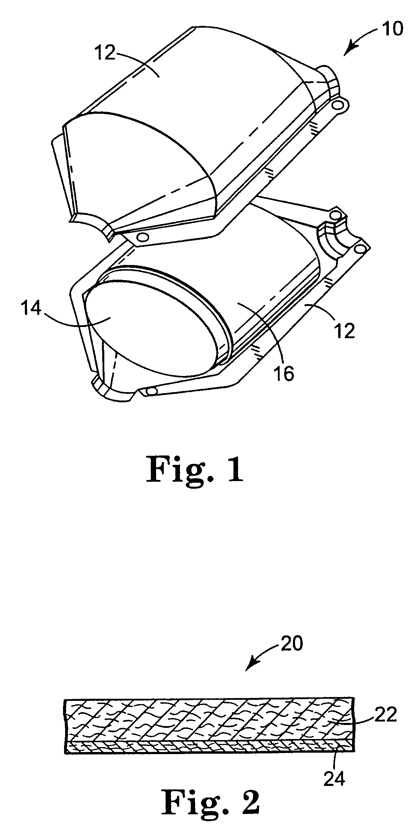

FIG. 1 depicts a pollution control device 10 utilizing the mounting material of the present invention. The pollution control device 10 includes a housing 12 and a pollution control element 14. The pollution control element 14 is resiliently supported by a high temperature mounting mat 16. The material utilized for the mounting mat 16 includes a combination of polycrystalline ceramic fibers and annealed ceramic fibers.

The mounting material of the present invention is particularly useful for thin-walled ceramic monoliths and metallic monoliths where a high degree of resiliency provides the force required to keep the pollution control element, or monolith in place. Surprisingly, the combination of polycrystalline ceramic fibers and annealed ceramic fibers provide a high degree of resiliency and erosion resistance with decreased shrinkage while maintaining adequate pressure retention at the operating temperatures of a pollution control device.

The mats made from the combination of materials of the present invention provide an advantage over mats formed in their entirety from either pure polycrystalline fibers or annealed ceramic fibers or a combination of polycrystalline fibers and ceramic fibers that have not been annealed. Mats which are formed from all polycrystalline fibers generally have an undesirable low density. Additionally, all polycrystalline fiber mats are bulky and must be compressed substantially, e.g., by a factor of about 10 to achieve the desired mount density needed to generate sufficient holding force to keep a monolith in place. Additionally, the mats made from polycrystalline materials must be compression bonded by means such as needle stitching, enclosing in a bag, adding binder and drying or curing under pressure to maintain the desired amount of compression, or combinations thereof to facilitate canning. Mats produced using only annealed fibers tend to exhibit lower resiliency values and reduced pressure retention values. The mats of the invention can be canned easily without additional compression means to hold the fibers down. Additionally, mats utilizing the combined fibers of the invention have both desirable resiliency values and pressure retention values.

In accordance with the present invention, the mounting material is generally provided in the form of a mat or sheet of material. The mat can be a single layer or multiple layers of the combined fibers. In one embodiment, a mat comprising a mixture of polycrystalline fibers and annealed ceramic fibers is used to mount the monolith. In another embodiment, a mat is formed of polycrystalline fibers, annealed ceramic fibers, and one or more intumescent materials. In yet another embodiment, a mat is formed comprising a layer of a mixture of polycrystalline fibers and annealed ceramic fibers, and one or more other layers, any of which can include intumescent materials. FIG. 2 depicts an example of the latter embodiment of a mat 20 having a first layer 22 of a mixture of polycrystalline fibers and annealed ceramic fibers and a second layer 24 of ceramic fibers which includes intumescent materials. Preferably, the first layer 22 of fibers is mounted against the monolith.

The ceramic-based polycrystalline fibers suitable for use in the present invention are generally produced from conventional sol-gel production processes. The use of polycrystalline fibers imparts a high temperature resiliency and erosion resistance to the mat of the present invention. Additionally, the utilization of a sol-gel process results in shot-free fibers. Fibers which contain shot, or particulate matter, can adversely impact the strength of the mat. Polycrystalline fibers useful in forming the mounting mat are those commercially available under the tradenames Nextel Fiber 312, Nextel Fiber 440, Nextel Fiber 550 all from 3M Company of St. Paul, MN, Fibermax fiber from Unifax of Niagra Falls, NY, Saffil fiber ICI Americas of Wilmington, DE, and Maftec fiber from Mitsubishi Chemical Corp. of Tokyo, JP. Preferably, the fibers contain a high amount of alumina. Most preferably, the alumina content is 60% or greater. The fibers compositions can also contain an amount of silica or zirconia. The length and diameter of the polycrystalline fibers can vary for particular applications. However, the polycrystalline fibers generally have fiber lengths greater than 5 cm and fiber diameters between about of 2 to 12 microns.

Annealed ceramic fibers are utilized in combination with the polycrystalline fibers to impart desirable properties to the finished mat. The annealed ceramic fibers are generally melt-formed refractory ceramic fibers which can be melt-blown or melt-spun from a variety of metal oxides. The melt-formed refractory fibers are subsequently annealed or heat treated at a temperature dependent upon the composition to form annealed amorphous fibers. The fibers are preferably a mixture of Al₂O₃ and SiO₂ having from 30 to 60% by weight of alumina and from 60 to 40% by weight of silica, preferably about equal parts by weight. The mixture can include other oxides such as B₂O₃, Cr₂O₅, and ZrO₂.

Melt-formed refractory ceramic fibers that can be used to make the high temperature mat are available from a number of commercial sources and include those known under the trade designation "Fiberfrax" from Unifrax., Niagara Falls, NY; "Cerafiber" and "Kaowool" from Thermal Ceramics Co., Augusta, GA; "Cer-wool" from Premier Refractories Co., Erwin, TN; and "SNSC" from Shin-Nippon Steel Chemical of Tokyo, Japan. The manufacturer of ceramic fibers known under the trade designation "Cer-wool" states that they are melt-spun from a mixture of 48% by weight silica and 52% by weight alumina and have an average fiber diameter of 3-4 micrometers. The manufacturer of ceramic fibers known under the trade designation "Cerafiber" states that they are meltspun from a mixture of by weight 54% silica and 46% alumina and have an average fiber diameter of 2.5-3.5 micrometers. The manufacturer of ceramic fibers "SNSC 1260-D1" states that they are melt-formed from a mixture of 54% by weight silica and 46% by weight alumina and have an average fiber diameter of about 2 micrometers.

The diameter of individual annealed ceramic fibers for the mat may vary depending on specific end uses. Typically, the diameters range from about 2 to about 8 micrometers because larger or smaller diameter fibers are difficult to make by melt forming refractory processes. Larger diameter fibers could produce a mat that would be more fragile which may require more binder to afford adequate handleability. It is difficult to melt-form refractory ceramic fibers at diameters smaller than 2 micrometers or larger than 8 micrometers.

The melt-formed refractory ceramic fibers must be annealed prior to end use application. When melt-formed refractory ceramic fibers are annealed at high temperatures, e.g., over 850°C or higher, the fibers devitrify or change into a crystalline state. There is a transition point during the devitrification process in which some fibers may develop a microcrystalline structure that is not detectable by X-ray diffraction, but can be detected by transmission electron microscopy. Other fibers start to develop crystallinity that is detectable by X-ray diffraction.

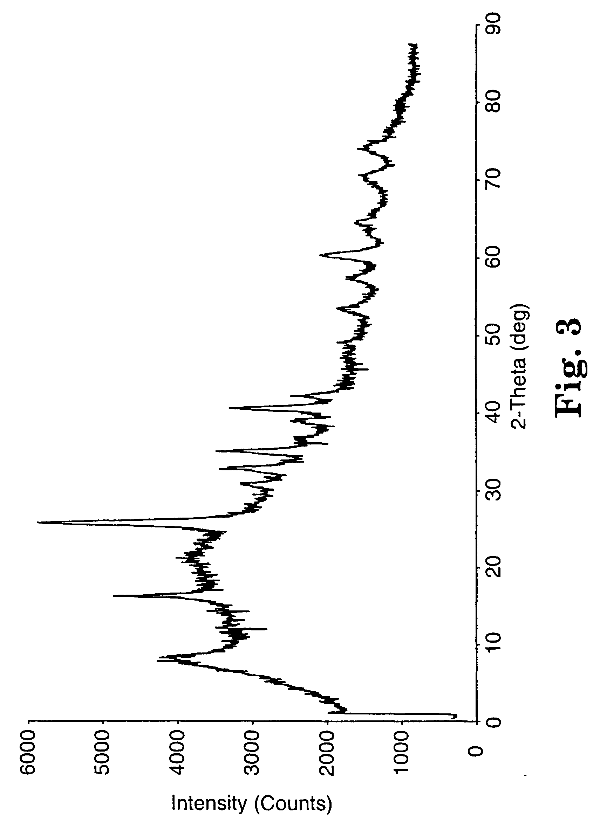

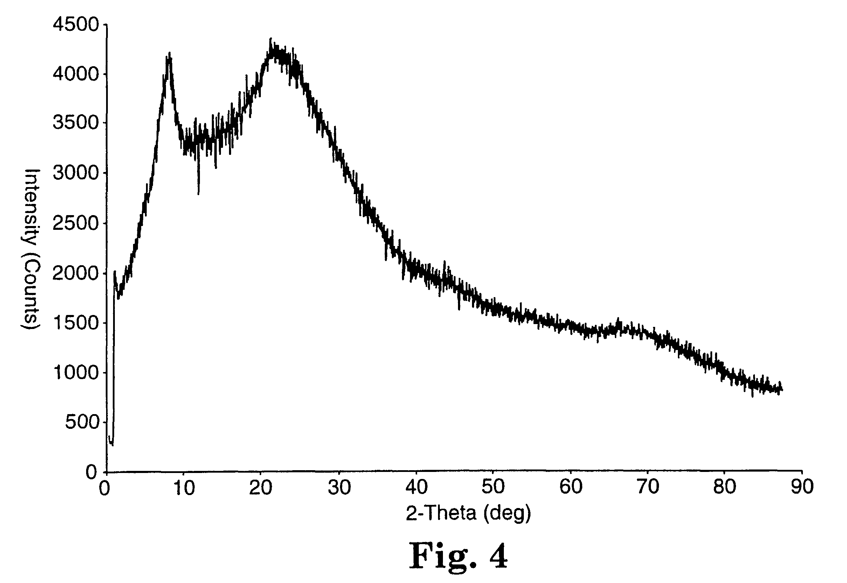

The fibers suitable in the practice of the invention are those which have been annealed at a temperature at which the formation of crystals starts or higher. FIG. 3 shows an X-ray diffraction scan of fibers that have been annealed sufficiently for the invention. FIG. 4 depicts an X-ray diffraction scan of amorphous fibers that would not be suitable for use in the invention. Those skilled in the art are capable of determining the presence of crystallinity from X-ray diffraction scans or alternatively from transmission electron microscopy.

There exists a time-temperature relationship in which the fibers can be annealed. For example, the fibers can be annealed at lower temperatures for longer periods of time to cause the crystal formation, or they can be annealed for shorter times at high temperatures. A suitable annealing temperature for the melt-formed fibers can be determined by differential thermal analysis (DTA) using equipment such as that available from Seiko Instruments, Inc. Those skilled in the art are capable of utilizing DTA data to determine temperatures at which specific fibers must be heated in order to achieve a desired level of annealing. For example, fibers having an approximate composition of 50% alumina and 50% silica would have an optimum annealing temperature of about 1000°C as indicated through differential thermal analysis.

Preferably, the annealing time and temperature are controlled so that the fibers do not become friable and difficult to handle. Additionally, excessive heat and time are unnecessary to achieve the advantages of the invention. The temperature at which the devitrification starts may vary depending upon factors such as how quickly the temperature is raised in the DTA and the material composition, but the temperature is typically between about 850°C and 1050° C.

Preferably, the annealed ceramic fibers and polycrystalline fibers are combined and randomly mixed to provide the high temperature mat of the present invention. A useful, mat can be made from about 5% to about 95% annealed ceramic fibers and 5 to 95% polycrystalline fibers wherein the sum of the weight of annealed ceramic fibers and the polycrystalline fibers is equal to 100%. Preferably, the mat is made from about 10 to 90% annealed amorphous fibers and 90 to 10% shot free ceramic fibers, and more preferably 20 to 80% annealed ceramic fibers and 80 to 20% polycrystalline fibers. It is preferred to minimize the amount of shot free fibers as these tend to be more costly to make and the larger amount of shot free fibers results in a mat that is more bulky. The annealed ceramic fibers may be present as long as the amounts of these fibers do not reduce the Resiliency Value of the mat to below 10 kPa or lead to an excessive erosion rate. Additionally other fibers may be added as long as the Resiliency Value of the mat is above 10 kPa.

Optionally, the mats of the present invention can further include intumescent materials. Suitable intumescent materials include, but are not limited to unexpanded vermiculite, vermiculite ore, partially delaminated vermiculite, expandable graphite, hydrobiotite, water swellable synthetic tetrasilicic fluorine type mica described in U.S. Pat. No. 3,001,571 (Hatch), partially dehydrated vermiculite as described in U.S. Pat. No. 5,151,253 (Merry et al.) and alkali metal silicate granules as described in U.S. Pat. No. 4,521,333 (Graham et al.). Preferred intumescent materials include unexpanded vermiculite, i.e., vermiculite ore, and expandable graphite. The choice of the intumescent materials can vary depending upon the desired end use. For higher temperatures, e.g., above about 500°C., vermiculite materials are suitable since they start to expand at about 340°C. to fill the expanding gap between the expanding metal housing and the monolith in a catalytic converter. For lower temperature use, e.g., below about 500° C., such as in diesel particulate filters, treated graphite may be preferred since it starts to expand at about 210° C. Treated vermiculites are also available; these expand at about 290° C. Blends of various intumescent materials can also be used.

Intumescent materials within a layer can be used in a range of between about 5 to about 75% by weight of the entire mat. In this embodiment, the annealed ceramic fibers and polycrystalline fibers are present in the amounts from about 10 to 70%. Optionally, a binder is present in amounts of from about 2 to 20%.

The mats of the invention are preferably made with binders to facilitate handling and to provide sufficient integrity and resiliency to bend around a monolith. The binders may be inorganic, such as clays and colloidal silica, or organic. Organic binders are preferred as they provide the requisite resiliency for handling the mat but burn off after the mat has been wrapped around a monolith and inserted into the metal housing of a pollution control device in a process referred to in the art as "canning". Organic binders can be used in amounts from about 2 to 20% by weight on a dry basis.

Suitable organic binder materials include aqueous polymer emulsions, solvent-based polymers, and 100% solids polymers. Aqueous polymer emulsions are organic binders polymers and elastomers in the latex form (e.g., natural rubber latices, styrene-butadiene latices, butadiene-acrylonitrile latices, and latices of acrylate and methacrylate polymers and copolymers). Solvent-based polymeric binders can include a polymer such as an acrylic, a polyurethane, or a rubber-based organic polymer. The 100% solids polymers include natural rubber, styrene-butadiene rubber, and other elastomers.

Preferably, the organic binder material includes an aqueous acrylic emulsion. Acrylic emulsions are preferred because of their aging properties and noncorrosive combustion products. Useful acrylic emulsions include those commercially available under the trade designations "RHOPLEX TR-934" (a 44.5% by weight solids aqueous acrylic emulsion) and "RHOPLEX HA-8" (a 45.5% by weight solids aqueous emulsion of acrylic copolymers) from Rohm and Haas of Philadelphia, PA., under the trade designation "NEOCRYL XA-2022" (a 60.5% solids aqueous dispersion of acrylic resin) from ICI Resins US of Wilmington, Mass., and under the trade name Airflex™ 600BP DEV (55% by weight solids aqueous emulsion of theylene vinyl acetate acrylate terpolymer) from Air Products and Chemicals, Inc., Allentown, Pa.

Organic binder materials can also include one or more plasticizers. Plasticizers tend to soften a polymer matrix and can contribute to the flexibility and moldability of the sheet materials made from the composition.

Other additives may also be added to form the mat in amounts needed for their intended purposes. Such additives include defoamers, flocculants, surfactants, and the like. Strength enhancing agents may be included with the inventive composition. Strength enhancing agents include, for example, organic fibers, such as cellulose fibers or bi-component binder fibers, and inorganic fibers, such as glass fibers or micro-fiberglass.

The high temperature mat of the present invention can be prepared by conventional means such as air laying or papermaking processes. In the papermaking process, ceramic fibers are mixed with water and a binder to form a mixture or slurry that is less than 10% solids. The slurry is then flocculated with flocculating agent and drainage retention aid chemicals. Then, the flocculated mixture is placed onto a papermaking machine to be formed into a mat and dewatered. The mats or sheets may also be formed by vacuum casting the slurry or mixture with conventional papermaking equipment. The mats are then dried in ovens or at room temperature. The dried mats are then cut by means such as stamping or die cutting into the desired shape. Alternatively, after formation of the mat, the mat can be stitch bonded, needle bonded, spray bonded, or subjected to a vacuum bagging process to place the mat in further condition for specific end use applications. Such modifications to the mat, with or without binder, are accomplished through processes conventionally recognized by those skilled in the art.

The mats can be made in various thicknesses to accommodate end use requirements. These requirements include the type of monolith (e.g., thin-walled, metal, standard thickness wall), the gap thickness at room temperature, the mount density at room temperature, the gap thickness at elevated temperatures, the pressure exerted by the mat at elevated temperatures, and the tendency of the mat to shrink or expand at elevated temperatures. A typical mounting mat having annealed ceramic fibers and polycrystalline fibers, but no intumescent materials, may range in thickness from about 1 to about 25 mm.

When an intumescent layer is included in a two layer mat construction, such as that depicted in FIG. 2, the intumescent layer can range in thickness from about 0.5 mm to 10.0 mm while the non-intumescent fiber layer can range from about 1 mm to about 15 mm. Multiple layers of mats can be formed in various combinations of intumescent and non-intumescent layers. In a pollution control device, an intumescent layer would be oriented such that it would be in contact with a metal housing.

When a mat is formed from a combination of fibers and intumescent materials within the same layer, the typical thickness can range from about 1 to 25 mm.

Additionally, the mats of the invention may include inserts such as those disclosed in U.S. Patent No. 5882608, or edge protectant materials such as that disclosed in EP 639700.

The resulting mat of the present invention exhibits a desirable resiliency as indicated through the resiliency value as determined by the RCFT test described below in the Examples section. The resiliency value is 10 kPa or greater, and preferably 15 kPa or greater at a room temperature starting pressure of 180 to 220 kPa. The pressure retention, described in the RCFT test described below, is typically greater than about 10% and preferably greater than about 12%.

The mats of the invention also exhibit low shrinkage. The shrinkage value of a given mat is recorded at temperatures between 500°C and 1000°C as determined through the Thermal Mechanical Analyzer test described below in the Examples section. A large amount of shrinkage between these temperatures is undesirable because the mat can lose holding power and allow the monolith to move and become damaged. The mats of the invention shrink about 5%, or less preferably, the mat shrinks about 3% or less and more preferably about 1% or less in order to maintain sufficient pressure retention to hold the monolith in place during repeated use.

The mat of the present invention exhibits a desirable resistance to erosion. The erosion resistance of the mat is generally about 0.1 gram/hour or less, as measured in accordance with the cold erosion test described in the Examples section.

The density of the resulting mat is generally within the range of about 0.1 to about 0.7 g/cm³. When compressed to a mount density of between 0.21 and 1.3 g/cm³, these mats have the ability to maintain a substantial holding force on the monolith in a catalytic converter despite the repeated gap change that occurs as the catalytic converter is heated and cooled.

The mat of the present invention is utilized to either wrap pollution control elements for placement in a pollution control device or as an insulating mat for end cones of a pollution control device. Suitable pollution control elements, also referred to as monoliths, are known in the art and include those made of metal or ceramic. The monoliths are used to support the catalyst materials for the converter. A useful catalytic converter element is disclosed, for example, in U.S. Pat. No. RE 27,747 (Johnson). Further, ceramic catalytic converter elements are commercially available, for example, from Corning Inc. of Corning, N.Y., and NGK Insulator Ltd. of Nagoya, Japan. For example, a honeycomb ceramic catalyst support is marketed under the trade designation "CELCOR" by Corning Inc. and "HONEYCERAM" by NGK Insulator Ltd. Metal catalytic converter elements are commercially available from Emitec Co. of Germany.

Pollution control devices includes both catalytic converters and diesel particulate traps. Diesel particulate traps similarly include one or more porous tubular or honeycomblike structures (having channels closed at one end, however) which are mounted by a thermally resistant material within a housing. Particulates are collected from exhaust gases in the porous structure until regenerated by a high temperature burnout procedure, which thermally taxes the mounting material. The mounting mat of the present invention can also be used in catalytic converters employed in the chemical industry which are located within exhaust or emission stacks, and which also contain fragile honeycomb type structures to be protectively mounted.

Thus, the objects of the invention are accomplished by the present invention, which is not limited to the specific embodiments described above, but which includes variations, modifications and equivalent embodiments defined by the following claims.

### TEST METHODS

### Real Condition Fixture Test (RCFT)

The RCFT is used to measure the pressure exerted by a mounting material under conditions representative of actual conditions found in a catalytic converter during normal use. It also provides a measure of resiliency.

Two 50.8 mm by 50.8 mm heated platens controlled independently are heated to different temperatures to simulate the metal housing and monolith temperatures. Simultaneously, the space or gap between the platens is increased by a value calculated from the temperature and thermal expansion coefficients of a typical catalytic converter. The temperatures of the platens and the gap change are presented in Table 1 below. The force exerted by the mounting material is measured by a Sintech ID computer controlled load frame with Extensometer (MTS Systems Corp., Research Triangle Park, N.C.).

The test is run for 3 cycles. During the first cycle, the organic binder burns out; during the second cycle pressure starts to level out at 900°C, and by the third cycle, the pressure has stabilized. The pressure retention (RCFT Pressure Retention in %) is determined by dividing the pressure at 900°C during the third cycle by the starting, i.e., before any cycles have been run, pressure at room temperature. The pressure in kiloPascals at 900°C in the third cycle is also recorded. This pressure is referred to as the Resiliency Value.

**TABLE 1**

| Top Platen Temperature -°C | Bottom Platen Temperature -°C | Cumulative Gap Change - mm |
|---|---|---|
| 25 | 25 | 0 |
| 50 | 25 | 0 |
| 100 | 30 | 0 |
| 150 | 33 | 0 |
| 200 | 35 | 0 |
| 250 | 38 | 0 |
| 300 | 40 | 0 |
| 350 | 45 | 0 |
| 400 | 50 | 0 |
| 450 | 60 | 0 |
| 500 | 70 | 0 |
| 550 | 85 | +0.0127 |
| 600 | 100 | +0.0254 |
| 650 | 125 | +0.0381 |
| 700 | 150 | +0.0508 |
| 750 | 185 | +0.0762 |
| 800 | 220 | +0.1016 |
| 850 | 325 | +0.1651 |
| 900 | 430 | +0.2286 |
| 900 | 480 | +0.2667 |
| 900 | 530 | +0.3048 |
| 850 | 502 | +0.2921 |
| 800 | 474 | +0.2794 |
| 750 | 445 | +0.2540 |
| 700 | 416 | +0.2286 |
| 650 | 387 | +0.2159 |
| 600 | 358 | +0.2032 |
| 550 | 329 | +0.1905 |
| 500 | 300 | +0.1778 |
| 450 | 275 | +0.1651 |
| 400 | 250 | +0.1524 |
| 350 | 210 | +0.1270 |
| 300 | 180 | +0.1016 |
| 250 | 155 | +0.0889 |
| 200 | 130 | +0.0762 |
| 150 | 95 | +0.0508 |
| 100 | 60 | +0.0254 |
| 50 | 43 | +0.0127 |
| 25 | 25 | 0 |

### Thermal Mechanical Analysis Test (TMA)

Expansion of a mat during heating is measured in this test. The test uses a Theta Dilatronic II Thermal Analyzer, Model MFE-715. In the test, an 11 mm diameter circle of the test mat is placed in a furnace and heated uniformly at a rate of 15°C per minute to 1000°C. A 7 mm quartz rod rests on top of the mat and the rod supports a 1350 gram weight. On heating, the mat may contract initially up to about 400°C or until the organic binder is burned out. As the sample is heated further, the mat starts to shrink. This displacement is measured and recorded as a function of mat temperature. The mat thicknesses at 500°C (T1) and at 1000°C (T2) are used to calculate the percent shrinkage (% shrinkage = [(T1-T2)/T1] x 100).

### Cold Erosion Test

This test is an accelerated test conducted under conditions that are more severe than actual conditions in a catalytic converter. It provides comparative data as to the erosion resistance of a mat mounting material. A test sample is cut into a square measuring 2.54 cm by 2.54 cm, weighed, and mounted between two high temperature Inconel 601 steel plates using spacers to obtain a mount density of 0.400+/-0.005 g/cm³. The test assembly is heated for two hours at 800°C and cooled to room temperature. The cooled test assembly is then positioned 3.8 mm in front of an air jet oscillating back and forth over the edge of the mat at 20 cycles per minute. This test is discontinued after 0.2 grams of material is lost or after 24 hours, whichever occurs first. The air jet impinges on the mat at a velocity of 305 meters per second. The erosion rate is determined by the weight loss divided by the time of the test and is reported in grams/hour (g/hr).

### Examples 1-3 and C1-C6

Fibers as listed in Table 2 were formed into mats as follows. The fibers were added to water in a Waring Blender at slow speed for about 10 seconds to form a slurry of 0.4% to 0.6% solids. The slurry was transferred to a 12 liter beaker with 10% by dry weight of a 45.5% solids acrylic latex binder (Rhoplex HA-8 available from Rhom & Haas) and mixed with a propeller mixer. A sufficient amount of a 50% aqueous solution of aluminum sulfate was added to adjust the pH to a range of from 4 to 6. Then 10 grams of a 0.1% solution of a flocculent (Nalco 7530) and about 0.2 grams defoamer (Foammaster III available from Henkel) were added and mixed with a propeller mixer. Immediately after mixing, the slurry was poured into a sheet mold as described in U.S. Patent No. 5,250,269, dewatered, wet pressed, and then dried to form a mat. The mats were tested for Pressure Retention in the RCFT Test, and for shrinkage as determined by the TMA Test. Catalytic converters can be made by wrapping the mats of Examples 1-3 around a monolithic structure, inserting the wrapped monolith into a metal housing, and welding around the housing.

**Table 2**

| Ex | Fibers | Mat Density g/cc | Shrinkage % | RCFT Pressure Retention % | Resiliency Value kPa | RCFT RT@ 1^{st} cycle KPa |
|---|---|---|---|---|---|---|
| 1 | 75% amorphous fibers*, annealed 25% polycrystalline fibers** | 0.19 | 0.8 | 14.1 | 27 | 191 |
| 2 | 50% amorphous fibers*, annealed 50% polycrystalline fibers** | 0.16 | 1.0 | 19.7 | 37 | 188 |
| 3 | 87.5% amorphous fibers*, annealed 12.5% polycrystalline fibers** | 0.21 | 0.8 | | | |
| C1 | 100% amorphous fibers*, annealed | 0.24 | 0.5 | 7.6 | 15 | 197 |
| C2 | 100% amorphous fibers* | 0.22 | 24.8 | 0 | 0 | 191 |
| C3 | 75% amorphous fibers*** 25% polycrystalline fibers** | 0.20 | 19.8 | 1.5 | 3 | 195 |
| C4 | 50% amorphous fibers*** 50% polycrystalline fibers** | 0.17 | 9.3 | 10.0 | 18 | 180 |
| C5 | 100% polycrystalline fibers** | 0.16 | 2.4 | 27.4 | 58 | 212 |
| C6 | 100% amorphous fibers*** | 0.32 | 25.9 | 0 | 0 | 190 |

| | | | | | | |
|---|---|---|---|---|---|---|
| *Kaowool™ HA available from Thermal Ceramics | | | | | | |
| **Saffil™OBM available from ICI | | | | | | |
| ***Fiberfrax™7000M available from Unifrax | | | | | | |

The data in Table 1 show the decreased shrinkage in the mats of the invention while having good pressure retention in the RCFT test.

Mats from Examples 1, 2, C1, and C5 were tested for cold erosion at a mount density of 0.4 g/cc. Data are shown in Table 3.

**Table 3**

| Example | Cold Erosion - g/hr @ 0.4 g/cc mount density |
|---|---|
| 1 | 0.023 |
| 2 | 0.004 |
| C1 | 0.127 |
| C5 | 0.001 |

The data in Table 3 show the improvement in cold erosion of the mats of the invention over amorphous annealed fibers alone. While Example C5 had comparable erosion resistance, it would still require an undesirable compression bonding step prior to final use.

### Examples 4-6

The mats of Examples 1-3 are combined with an intumescent mat such are Interam™ Type 100 mat available from 3M Company to produce two layer mats each of which has an intumescent layer and a non-intumescent layer. Catalytic converters are prepared by mounting the two layer mats between the monolith and the metal housing with the non-intumescent layer against the monolith and the intumescent layer against the housing. Optionally, the intumescent layer can be mounted against the monolith.

In Example 7, an intumescent material is combined with the ceramic-based polycrystalline fibers and annealed fibers of Example 1. Unexpanded vermiculate flakes are added to the fibers of Example 1 in amount to obtain 30% by weight of material. The resulting mat would have a density within the range of 0.1 to 0.7 grams/cm³.

From the above disclosure of the general principles of the present invention and the preceding detailed description, those skilled in this art will readily comprehend the various modifications to which the present invention is susceptible. Therefore, the scope of the invention should be limited only by the following claims and equivalents thereof

## Claims

1. A high temperature mat for use in a pollution control device, **characterized in that** it comprises a mixture of ceramic-based polycrystalline fibers and annealed ceramic fibers.

2. A high temperature mat as recited in claim 1, wherein said mounting mat includes an organic binder.

3. A high temperature mat as recited in claim 1, wherein said ceramic-based polycrystalline fibers and said annealed ceramic fibers are bound in a fiber mass through either stitch bonding, needle bonding, spray bonding or vacuum bagging.

4. A high temperature mat as recited in claim 1, wherein said mat includes intumescent materials.

5. A high temperature mat as recited in claim 1, further comprising a layer of intumescent material bonded to said high temperature mat.

6. A high temperature mat as recited in claim 5, wherein said layer of intumescent material is either laminated onto a surface of said mat or co-formed with said mat.

7. A high temperature mat as recited in claim 1, wherein said ceramic-based polycrystalline fibers are included in a range of about 5% to about 95%.

8. A high temperature mat as recited in claim 1, wherein said annealed ceramic fibers are included in a range of about 5% to about 95%.

9. A high temperature mat as recited in claim 1, wherein said ceramic-based polycrystalline fibers contain alumina in an amount of about 60% or greater.

10. A high temperature mat as recited in claim 1, wherein said high temperature mat exhibits a resiliency value of about 10 kPa or greater according to the real condition fixtures test.

11. A high temperature mat as recited in claim 1, wherein a plurality of layers of said high temperature mat are bonded together.

12. A high temperature mat as recited in claim 1, wherein said high temperature mat exhibits shrinkage of about 5% or less.

13. A high temperature mat as recited in claim 1, wherein said high temperature mat exhibits a pressure retention of about 10% or greater.

14. A high temperature mat as recited in claim 1, wherein said high temperature mat has a density within the range of about 0.1 to about 0.7 g/cm³.

15. A high temperature mat as recited in claim 1, wherein said mat exhibits an erosion value of 0.1 g/hr or less in accordance with the cold erosion test.

16. A pollution control device, comprising:
(a) a housing and
(b) a pollution control element positioned within said housing, said pollution control element having an outer surface, **characterized in that** it further comprises
(c) a high temperature mat as recited in claim 1 positioned around the outer surface of said pollution control element between said pollution control element and said housing.

17. A pollution control device as recited in claim 16, wherein said high temperature mat includes an organic binder.

18. A pollution control device as recited in claim 16, wherein said ceramic-based polycrystalline fibers and said annealed ceramic fibers are bound in a fiber mass through either stitch bonding, needle bonding, spray bonding, or vacuum bagging.

19. A pollution control device as recited in claim 16, wherein said mat includes intumescent materials.

20. A pollution control device as recited in claim 16, further comprising a layer of intumescent material bonded to said mounting mat, said mounting mat positioned against the outer surface of said pollution control element.

21. A pollution control device as recited in claim 16, wherein said polycrystalline fibers are included in a range of about 5% to about 95%.

22. A pollution control device as recited in claim 16, wherein said ceramic fibers are included in a range of about 5% to about 95%.

23. A pollution control device, comprising
a housing having at least one double wall end cone, **characterized in that** it comprises
a high temperature mat as recited in claim 1 positioned between inner and outer cones of the double wall end cone of said housing.

## Patentansprüche

1. Hochtemperaturfeste Lagermatte zur Verwendung in einer Abgasreinigungsvorrichtung, **dadurch gekennzeichnet, dass** die Matte eine Mischung aus polykristallinen Fasern auf Keramikbasis und getemperten Keramikfasern aufweist.

2. Hochtemperaturfeste Lagermatte nach Anspruch 1, wobei die Lagermatte ein organisches Bindemittel aufweist.

3. Hochtemperaturfeste Lagermatte nach Anspruch 1, wobei die polykristallinen Fasern auf Keramikbasis und die getemperten Keramikfasern durch Nähwirken, Nadeln, Sprühbindung oder Vakuumsackverfahren in einer Fasermasse gebunden sind.

4. Hochtemperaturfeste Lagermatte nach Anspruch 1, wobei die Matte schaumbildende Materialien aufweist.

5. Hochtemperaturfeste Lagermatte nach Anspruch 1, des Weiteren aufweisend eine Schicht aus schaumbildendem Material, das mit der hochtemperaturfesten Matte verbunden ist.

6. Hochtemperaturfeste Lagermatte nach Anspruch 5, wobei die Schicht aus schaumbildendem Material entweder auf einer Oberfläche der Matte aufgebracht oder zusammen mit der Matte gebildet ist.

7. Hochtemperaturfeste Lagermatte nach Anspruch 1, wobei der Anteil der polykristallinen Fasern auf Keramikbasis im Bereich zwischen ungefähr 5 % und ungefähr 95 % liegt.

8. Hochtemperaturfeste Lagermatte nach Anspruch 1, wobei der Anteil der getemperten Keramikfasern im Bereich zwischen ungefähr 5 % und ungefähr 95 % liegt.

9. Hochtemperaturfeste Lagermatte nach Anspruch 1, wobei die polykristallinen Fasern auf Keramikbasis einen Anteil von ungefähr 60 % oder mehr an Tonerde aufweisen.

10. Hochtemperaturfeste Lagermatte nach Anspruch 1, wobei die hochtemperaturfeste Lagermatte gemäß dem Test der Anlage unter realen Bedingungen einen Elastizitätswert von ungefähr 10 kPa oder mehr aufweist.

11. Hochtemperaturfeste Lagermatte nach Anspruch 1, wobei eine Mehrzahl von Schichten der hochtemperaturfesten Lagermatte miteinander verbunden ist.

12. Hochtemperaturfeste Lagermatte nach Anspruch 1, wobei die hochtemperaturfeste Lagermatte eine Schrumpfung von ungefähr 5 % oder weniger aufweist.

13. Hochtemperaturfeste Lagermatte nach Anspruch 1, wobei die hochtemperaturfeste Lagermatte eine Druckspeicherung von etwa 10 % oder mehr aufweist.

14. Hochtemperaturfeste Lagermatte nach Anspruch 1, wobei die hochtemperaturfeste Lagermatte eine Dichte im Bereich zwischen ungefähr 0,1 und ungefähr 0,7 g/cm³ aufweist.

15. Hochtemperaturfeste Lagermatte nach Anspruch 1, wobei die Matte gemäß dem Kaltabnützungstest einen Abnützungswert von 0,1 g/h oder weniger aufweist.

16. Abgasreinigungsvorrichtung, aufweisend:
(a) ein Gehäuse und
(b) ein Abgasreinigungselement, das innerhalb des Gehäuses angeordnet ist, wobei dieses Abgasreinigungselement eine äußere Oberfläche aufweist,
**dadurch gekennzeichnet, dass** sie des Weiteren
(c) eine hochtemperaturfeste Lagermatte nach Anspruch 1 aufweist, die zwischen dem Abgasreinigungselement und dem Gehäuse rund um die äußere Oberfläche des Abgasreinigungselements angeordnet ist.

17. Abgasreinigungsvorrichtung nach Anspruch 16, wobei die hochtemperaturfeste Lagermatte ein organisches Bindemittel aufweist.

18. Abgasreinigungsvorrichtung nach Anspruch 16, wobei die polykristallinen Fasern auf Keramikbasis und die getemperten Keramikfasern durch Nähwirken, Nadeln, Sprühbindung oder Vakuumsackverfahren in einer Fasermasse gebunden sind.

19. Abgasreinigungsvorrichtung nach Anspruch 16, wobei die Matte schaumbildende Materialien aufweist.

20. Abgasreinigungsvorrichtung nach Anspruch 16, des Weiteren aufweisend eine Schicht aus schaumbildendem Material, die mit der Lagermatte verbunden ist, wobei die Lagermatte an der äußeren Oberfläche des Abgasreinigungselements angeordnet ist.

21. Abgasreinigungsvorrichtung nach Anspruch 16, wobei der Anteil der polykristallinen Fasern in einem Bereich zwischen ungefähr 5 % und ungefähr 95 % liegt.

22. Abgasreinigungsvorrichtung nach Anspruch 16, wobei der Anteil der Keramikfasern in einem Bereich zwischen ungefähr 5 % und ungefähr 95 % liegt.

23. Abgasreinigungsvorrichtung, aufweisend ein Gehäuse, das mindestens einen doppelwandigen Endkegel aufweist, **dadurch gekennzeichnet, dass** sie eine hochtemperaturfeste Lagermatte nach Anspruch 1 aufweist, die zwischen dem inneren und dem äußeren Kegel des doppelwandigen Endkegels des Gehäuses angeordnet ist.

## Revendications

1. Matte à température élevée à utiliser dans un dispositif de contrôle de la pollution, **caractérisée en ce que** ladite matte comprend un mélange de fibres poly-cristallines à base de céramique et de fibres de céramique recuites.

2. Matte à température élevée selon la revendication 1, dans laquelle ladite matte de montage comprend un liant organique.

3. Matte à température élevée selon la revendication 1, dans laquelle lesdites fibres poly-cristallines à base de céramique et lesdites fibres de céramique recuites sont liées pour former une masse de fibres via soit un assemblage par des agrafes, un assemblage par des aiguilles, un assemblage par pulvérisation ou un ensachage sous vide.

4. Matte à température élevée selon la revendication 1, dans laquelle ladite matte comprend des matières intumescentes.

5. Matte à température élevée selon la revendication 1, comprenant en outre une couche de matière intumescente liée à ladite matte à température élevée.

6. Matte à température élevée selon la revendication 5, dans laquelle ladite couche de matière intumescente est soit stratifiée sur une surface de ladite matte, soit co-formée avec ladite matte.

7. Matte à température élevée selon la revendication 1, dans laquelle lesdites fibres poly-cristallines à base de céramique sont présentes en une quantité comprise entre environ 5 % et environ 95 %.

8. Matte à température élevée selon la revendication 1, dans laquelle lesdites fibres de céramique recuites sont présentes en une quantité comprise entre environ 5 % et environ 95 %.

9. Matte à température élevée selon la revendication 1, dans laquelle lesdites fibres poly-cristallines à base de céramique contiennent de l'alumine en une quantité égale ou supérieure à environ 60 %.

10. Matte à température élevée selon la revendication 1, dans laquelle ladite matte à température élevée présente une valeur d'élasticité égale ou supérieure à environ 10 kPa en fonction du test des fixations en conditions réelles.

11. Matte à température élevée selon la revendication 1, dans laquelle une pluralité de couches de ladite matte à température élevée sont liées les unes aux autres.

12. Matte à température élevée selon la revendication 1, dans laquelle ladite matte à température élevée présente un retrait égal ou inférieur à environ 5 %.

13. Matte à température élevée selon la revendication 1, dans laquelle ladite matte à température élevée présente une rétention de pression égale ou supérieure à environ 10 %.

14. Matte à température élevée selon la revendication 1, dans laquelle ladite matte à température élevée présente une densité comprise dans la gamme allant d'environ 0,1 à environ 0,7 g/cm³.

15. Matte à température élevée selon la revendication 1, dans laquelle ladite matte présente une valeur d'érosion de 0,1 g/heure ou moins selon le test d'érosion à froid.

16. Dispositif de contrôle de la pollution, comprenant:
(a) un boîtier; et
(b) un élément de contrôle de la pollution positionné à l'intérieur dudit boîtier, ledit élément de contrôle de la pollution présentant une surface extérieure,
**caractérisé en ce qu'**il comprend en outre:
(c) une matte à température élevée selon la revendication 1 positionnée autour de la surface extérieure dudit élément de contrôle de la pollution entre ledit élément de contrôle de la pollution et ledit boîtier.

17. Dispositif de contrôle de la pollution selon la revendication 16, dans lequel ladite matte à température élevée comprend un liant organique.

18. Dispositif de contrôle de la pollution selon la revendication 16, dans lequel lesdites fibres poly-cristallines à base de céramique et lesdites fibres de céramique recuites sont liées pour former une masse de fibres via soit un assemblage par des agrafes, un assemblage par des aiguilles, un assemblage par pulvérisation ou un ensachage sous vide.

19. Dispositif de contrôle de la pollution selon la revendication 16, dans lequel ladite matte comprend des matières intumescentes.

20. Dispositif de contrôle de la pollution selon la revendication 16, comprenant en outre une couche de matière intumescente liée à ladite matte de montage, ladite matte de montage étant positionnée contre la surface extérieure dudit élément de contrôle de la pollution.

21. Dispositif de contrôle de la pollution selon la revendication 16, dans lequel lesdites fibres poly-cristallines sont présentes en une quantité comprise entre environ 5 % et environ 95 %.

22. Dispositif de contrôle de la pollution selon la revendication 16, dans lequel lesdites fibres de céramique sont présentes en une quantité comprise entre environ 5 % et environ 95 %.

23. Dispositif de contrôle de la pollution, comprenant un boîtier présentant au moins un cône d'extrémité à double paroi, **caractérisé en ce qu'**il comprend une matte à température élevée selon la revendication 1 positionnée entre des cônes intérieur et extérieur du cône d'extrémité à double paroi dudit boîtier.
